# EUROPÄISCHE PATENTANMELDUNG

(11) **EP 0 859 031 A2**
(43) Veröffentlichungstag der Anmeldung: **19.08.1998**
(21) Anmeldenummer: 98100593.7
(22) Anmeldetag: 15.01.1998
(51) Int. Cl.: C08L 101/00, C08L 3/00, C08L 1/10, C08L 75/04, C08L 77/00

(54) **Faserverstärktes Kuststoff-Formteil und Verfahren zu dessen Herstellung**

(30) Priorität: 12.02.1997 DE 19705280
(71) Anmelder: Daimler-Benz Aktiengesellschaft, 70546 Stuttgart (DE)
(72) Erfinder: Fölster, Thomas, Dr., 71120 Grafenau (DE); Greiner, Ralph, Dr., 71229 Leonberg (DE); Schäfer, Dirk, 89075 Ulm (DE)

(57) **Zusammenfassung**

Die Erfindung betrifft ein faserverstärktes Kunststoff-Formteil sowie ein Verfahren zur dessen Herstellung. Das faserverstärkte Kunststoff-Formteil bestehend aus einer Kunststoffmatrix mit in der Kunststoffmatrix insbesondere gleichverteilt angeordneten Naturfasern. Die Kunststoffmatrix besteht weist mindestens zwei miteinander vermischte Polymere auf, von denen eines ein Bio-Polymer und das andere ein gegenüber biologischen Beanspruchungen zumindest weitgehend resistentes Polymer ist.

## Beschreibung

Die Erfindung betrifft ein faserverstärktes Kunststoff-Formteil sowie ein Verfahren zur dessen Herstellung, wie beides aus der gattungsbildend zugrundegelegten Artikel Titel: "Werkstoffe im Automobilbau", in der DE-Z: Sonderausgabe der Automobiltechnischen Zeitung (ATZ), als Beilage in der Ausgabe vom Juli/August 1996, Seite 74 - 77 als bekannt hervorgeht.

Aus dem Artikel Titel: "Werkstoffe im Automobilbau", in der DE-Z: Sonderausgabe der Automobiltechnische Zeitung (ATZ) ist ein faserverstärktes Kunststoff-Formteil bekannt, das aus einer Kunststoffmatrix und aus Naturfasern, die in der Kunststoffmatrix eingebettet sind, gebildet ist. Um eine gute Entsorgung des Kunststoff-Formteils zu gewahrleisten, besteht die Kunststoffmatrix aus sogenannten Bio-Polymeren, die natürliche, organische Makromoleküle sind, und aus nachwachsenden Rohstoffen wie Zuckerrüben, Kartoffeln, Mais oder Cellulose (auch Altpapier) gewonnen werden. Als Naturfasern werden derartige Fasern bezeichnet, die als nachwachsende Rohstoffe aus der Natur geWonnen werden. Derartig ausgebildete Kunststoff-Formteile werden bei der Entsorgung biologisch unbedenklich abgebaut, da alle ihre organischen Bestandteile verrotten und bei dem Rottezyklus in Wasser, CO₂, Humus und Biomasse sowie Bakterien und Pilze umgewandelt werden, wobei das bei der Verottung entstehende CO₂ in der Ökö-Bilanz neutral ist, da es ja zuvor von den nachwachsenden Rohstoffen aus der Atmosphäre entnommen wurde.

Aufgrund dieser Ausbildung sind diese Formteile im Einsatz allerdings auch gegenüber einer biologischen Beanspruchung, wie sie normalerweise immer vorliegt, anfällig, weshalb sie für qualitativ hochwertige und insbesondere langlebige Formteile, wie sie insbesondere in der Automobilindustrie eingesetzt werden, zumindest bedenklich sind. Für einen Einsatz als qualitativ hochwertige und langlebige Formteile werden diese Kunststoff-Formteile daher auch besonders geschützt. Dies geschieht insbesondere durch den Auftrag einer schützenden Überzugs wie Lacke oder dgl. oder indem als Bio-Polymere solche Polymere gewählt werden die einen langsamen, insbesondere mehrere Jahre dauernden Verrottungsprozeß aufweisen. Ein vor biologischen Beanspruchungen schützender Überzug weist allerdings wieder ökologisch bedenkliche Substanzen auf und der langsame Verrottungsprozeß nimmt bei der Entsorgung viel Zeit und damit Deponieraum in Anspruch oder aber eine entsprechend aufwendige Kompostieranlage.

Die Aufgabe der Erfindung ist es, das zugrundegelegte Kunststoff-Formteil dahingehend weiterzuentwickeln, daß es bei einfacher und ökologisch unbedenklicher Entsorgungsmöglichkeit auch als hochwertiges und langlebiges Kunststoff-Formteil verwendet werden kann. Desweiteren ist es Aufgabe der Erfindung ein Verfahren zu entwickeln, mit dem derartige Kunststoff-Formteile hergestellt werden können.

Die Aufgabe wird bezüglich des zugrundegelegten Kunststoff-Formteils mit den kennzeichnenden Merkmalen des Anspruchs 1 und bezüglich des zugrundegelegten Verfahrens mit den kennzeichnenden Verfahrensschritten des Anspruchs 12 gelöst. Durch die Verwendung von Bio-Polymeren, die von gegenüber biologischen Beanspruchungen weitgehend resistenten Polymeren großteils umschlossen sind, weisen aus derartigen Materialien gefertigte Bauteile eine gute Stabilität auf. Desweiteren können sie nach deren Lebenszeit entweder werkstofflich recycelt werden, bspw. durch erneute thermoplastische Verarbeitung, ggf. nach Bio-Polymer und resistentem Polymer getrennt oder aber auch gemeinsam einem großteils CO₂-neutralen Abbauvorgang zugeführt werden.

Weitere vorteilhafte Ausgestaltungen der Erfindung sind den Unteransprüchen entnehmbar. Im übrigen wird die Erfindung anhand von in den Figuren dargestellten Ausführungsbeispieles und sechs beispielhaften Proben nähers erläutert. Dabei zeigt
- Fig. 1: eine Schnitt durch ein plattenartiges Kunststoff-Formteil,
- Fig. 2: eine mit einem Rasterelektronenmikroskop aufgenommene 500-fache Vergrößerung eines Schnittes durch Probe 2,
- Fig. 3: eine REM-Aufnahme einer 500-fachen Vergrößerung eines Schnittes durch Probe 5 und
- Fig. 4: eine REM-Aufnahme einer 500-fachen Vergrößerung eines Schnittes durch Probe 6.

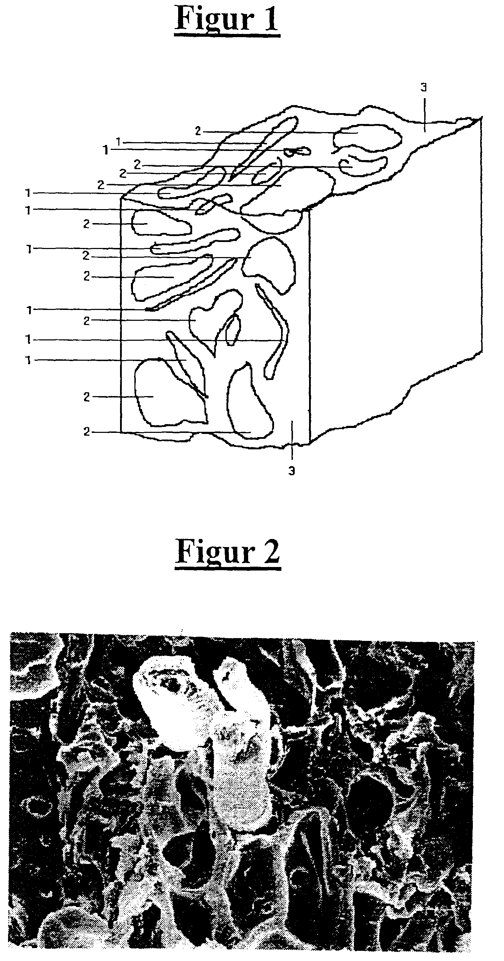

In Figur 1 ist der prinzipielle innere Aufbau eines erfindungsgemäßen faserverstärktes Kunststoff-Formteil dargestellt. Das Kunststoff-Formteil weist eine Kunststoffmatrix auf, in der angeordneten Naturfasern 1 gleichverteilt angeordnet sind. Die Kunststoffmatrix selbst weist zwei miteinander vermischte Polymere auf, von denen eines ein Bio-Polymer 2 und das andere ein gegenüber biologischen Beanspruchungen zumindest weitgehend resistentes Polymer 3 ist. Allerdings ist selbst das resistente Polymer 2 sinnvollerweise auch ein Kunststoff, der selbst oder zumindest dessen Ausgangsprodukte nachwachsende Rohstoffe sind.

Für das Bio-Polymer 2 ist insbesondere die Verwendung von thermoplastischer und/oder granulärer Stärke zweckmäßig. Für das resistent Polymer 3 ist es sinnvoll ein thermoplastisches Polymer zu verwenden, wobei die folgende Stoffe besonders günstig sind: Polyurethan (PU) und/oder Polyamid(PA) und/oder Cellulose und/oder ein Cellulosederivat und/oder Cellulosepropionat und/oder PA 11 und/oder PA 610 und/oder PA 669 und/oder ein PA auf der Basis von Azelainsäure und/oder ein thermoplastisches PU mit Polyolkomponente naxhweachsender Rohstoffe und/oder ein Celluloseetherester.

Im Falle eines Celluloseetherester als resistentes Polymer 3 ist es sinnvoll, einen Celluloseetherester mit hohem Substitutionsgrad zu verwenden, da dieser biologisch zumindest weitgehend resistent ist.

In zweckmäßiger Weise bildet das Bio-Polymer 2 in der Kunststoffmatrix eine disperse Phase, während das resistente Polymer 3 eine kontinuierliche Phase bildet, wobei das resistente Polymer 3 die disperse Phase zumindest weitgehend, vorzugsweise vollständig umschließt.

Bei der Verwendung von thermoplastischer Stärke für die Kunststoffmatrix kann die Stärke zur besseren Verarbeitung mit gebräuchlichen Weichmachern, wie insbesondere Glyzerin und/oder Harnstoff und/oder Fruchtsäure, aufgeschlossen werden.

Im folgenden wird die mögliche Herstellung eines erfindungsgemäßen faserverstärkten Kunststoff-Formteils beschrieben. Zuerst wird die körnige Kunststoffmasse aus Bio-Polymer 2 und resistentem Polymer 3 mit den Naturfasern 1 vermischt, wodurch die Naturfasern 1 in der Kunststoffmasse verteilt werden. Bei der Verteilung der Naturfasern 1 in der Kunststoffmasse werden diese vorzugsweise von der Kunststoffmasse zumindest weitgehend umschlossen.

Anschließend wird das Kunststoff/Naturfaser-Gemisch, das zwischen 5 und 60 Gewichts-%, insbesondere zwischen 5 und 35 Gewichts-% Naturfasern 1 aufweist, auf eine Temperatur zwischen 100 °C bis 250 °C insbesondere bis 230 °C bspw. mittels eines Agglomerators erwärmt.

Das erwärmte Kunststoff/Naturfaser-Gemisch wird durch an sich bekannte Verfahren wie bspw. durch Spritzen, Extrudieren und/oder Pressen und dgl. in die gewünschte Form gebracht und abgekühlt, wodurch das Kunststoff-Formteil härtet. Spätestens bei der Formgebung des Kunststoff-Formteils wird das Bio-Polymer 2 von dem resistenten Polymer 3 zumindest weitgehend umschlossen.

Bevorzugte Verwendungen für derartige Kunststoff-Formteile sind Formteile für Last- oder Personenkraftwagen oder Schienenfahrzeuge oder Luftfahrzeuge, insbesondere für deren Karosserie und/oder deren Verkleidung.

Zur Aufbereitung des Kunststoff/Naturfaser-Gemisches vor dem Formen der Kunststoff-Formteile wurde u.a. ein Agglomerator-Anlage der FA. Pallmann Typ PFY 250/40 verwendet (siehe Tabelle 1 und 2, Proben 1 bis 3 und 6). Die Lochmatrize des Agglomerator hatte einen Durchmesser von 280 mm, eine Dicke von 92 mm und einen Bohrungsdurchmesser von 3,2 mm.

Zur Herstellung des Kunststoff/Naturfaser-Gemisches wurden das resistente Polymer 3 - im Falle der in den Tabellen beschriebenen Proben 1 bis 6 Cellulosepropoíonat (CP) - und das Bio-Polymer 2 granuläre Kartoffelstärke (Proben 1 bis 3) oder granuläre thermoplastische Stärke (bei Probe 6) vorgemischt, und per Rüttelrinne einer Zuführschnecke zugeführt.

Die Dosierung der Naturfasern 1 (Grünflachsfasern) erfolgt über einen Dosier-Vorratsbehälter und eine Austragsschnecke im Bereich der Zuführschnecke. In der Arbeitskammer des Agglomerators wird das Vorgemisch plastifiziert und durch die Bohrungen der Lochmatrize gepreßt.

Die durch Friktion erreichte Verarbeitungstemperatur lag zwischen 150 und 200 °C. Die Durchsatzleistung belief sich auf etwa 150 kg/h bei einem Schüttgewicht zwischen 490 und 500 g/l.

Mit der obigen Methode wird ein kompaktes Kunststoff/Naturfaser-Gemisch (Agglomerator) von relativ gleichmäßiger Größe, einem guten Zusammenhalt und ausreichender Homogenität hergestellt, aus welchem anschließend in üblicher Weise das Kunststoff-Formteil gefertigt werden kann. In den beiden nachfolgenden Tabellen sind derartige Kunststoff-Formteile am Ende mit einem "A" gekennzeichnet (siehe Proben 1 bis 3 sowie Probe 6).

Die Vorteile des Agglomerators liegen darin,
- daß kein thermischer Abbau der Kunststoffe und der Fasern erfolgt,
- daß ein rieselfähiges Kunststoff/Naturfaser-Gemisch erzeugt wird,
- daß das Kunststoff/Naturfaser-Gemisch eine hohe Festigkeit aufweist, so daß es bei einer weiteren Verarbeitung und bei einem Transport allenfalls noch geringfügig zerfällt und
- daß das Kunststoff/Naturfaser-Gemisch durch eine Entgasung einen geringen Feuchtigkeitsgehalt aufweist.

Bei der Herstellung der Kunststoff-Formteile wurde auch eine Flachmatrizenpresse verwendet, die besser unter dem Namen "Kollermühle" bekannt ist. Hierbei werden die Kunststoffe und die Naturfasern 1 nur mechanisch miteinander verpreßt und nicht plastifiziert. Es handelt sich also um eine Kompaktierung, bei der das Kunststoff/Faser-Gemisch derart verdichtet wird, daß sich ein Kunststoff-Formteil ausreichender Stabilität und Festigkeit bildet. In den beiden nachfolgenden Tabellen sind derartige Kunststoff-Formteile am Ende mit einem "B" gekennzeichnet (siehe Proben 1 bis 3 sowie Probe 6).

In den beiden bereits genannten Tabellen 1 und 2 ist Wasseraufnahme und einige Materialeigenschaften von erfindungsgemäß hergestellten Kunststoff-Formteile angegeben. Bei den einzelnen Proben 1 bis 6 werden sowohl die verwendeten Materialien als auch deren prozentuale Zusammensetzung angegeben. Zum besseren Vergleich weisen die Proben 1 bis 5 bis auf den unterschiedlichen Anteil an Weichmachern die gleichen Ausgangsmaterialien auf.

Unterschiede gab es im Mischungsverhältnis und in der Herstellung des Kunststoff/Naturfaser-Gemisch, das - wie oben erwähnt - entweder unter Zuhilfenahme eines Agglomerators oder einer Flachmatrizenpresse (also einer sogenannten Kollermühle) hergestellt wurde.

Zur Kennzeichnung der Zusammensetzung der Proben wird die nachfolgend aufgeführte allgemeine Nomenklatur verwendet,

Probe i) : Ex/F/FF U:V:W A oder K, mit
- E:: CP mit x-% Weichmacher und/oder
- E:: thermoplastische Stärke (TPS) mit x-% Glyzerin (G) als Weichmacher,
- F:: granuläre Kartoffelstärke (gKS),
- FF:: Grünflachsfasern
- A:: Verwendung eines Agglomoérators
- K:: Verwendung einer Kollermühle.

**Tabelle 1**

| Wasseraufnahme in [%]nach DIN 53 495 | | | | | | |
|---|---|---|---|---|---|---|
| Probe | Zusammensetzung | 1h | 2h | 4h | 8h | 24h |
| 1 | CP10/gKS/FF 70:20:10 A | 0,6 | 0,7 | 1,1 | - | 1,7 |
| 2 | CP10/gKS/FF 60:27:13 A | 0,9 | 1,1 | 1,5 | - | 2,2 |
| 3 | CP10/gKS/FF 50:33:17 A | - | - | - | - | - |
| 4 | CP10/gKS/FF 60:20:20 K | 1,1 | 1,5 | 2,0 | - | 2,7 |
| 5 | CP10/gKS/FF 60:27:13 K | 1,1 | 1,5 | 1,9 | - | 2,7 |
| 6 | CP10/TPS20G/FF 43:43:14 A | 1,4 | 2,1 | 2,9 | 4,1 | 7,2 |

**Tabelle 2**

| Materialeigenschaften | | | | |
|---|---|---|---|---|
| Probe | Zusammensetzung | Zug-E-Modul nach DIN 53 455 in[N/mm²] | Zugfestigkeit nach DIN 53 445 in [N/mm²] | Schlagzähigkeit nach DIN 53 453 in [KJ/m] |
| 1 | CP10/gKS/FF 70:20:10 A | 3623 | 41 | 8 |
| 2 | CP10/gKS/FF 60:27:13 A | 4580 | 41 | 8 |
| 3 | CP10/gKS/FF 50:33:17 A | 4357 | 37 | 5 |
| 4 | CP10/gKS/FF 60:20:20 K | 5142 | 36 | 8 |
| 5 | CP10/gKS/FF 60:27:13 K | 4358 | 34 | 8 |
| 6 | CP10/TPS20G/FF 43:43:14 A | 3238 | 29 | 7 |

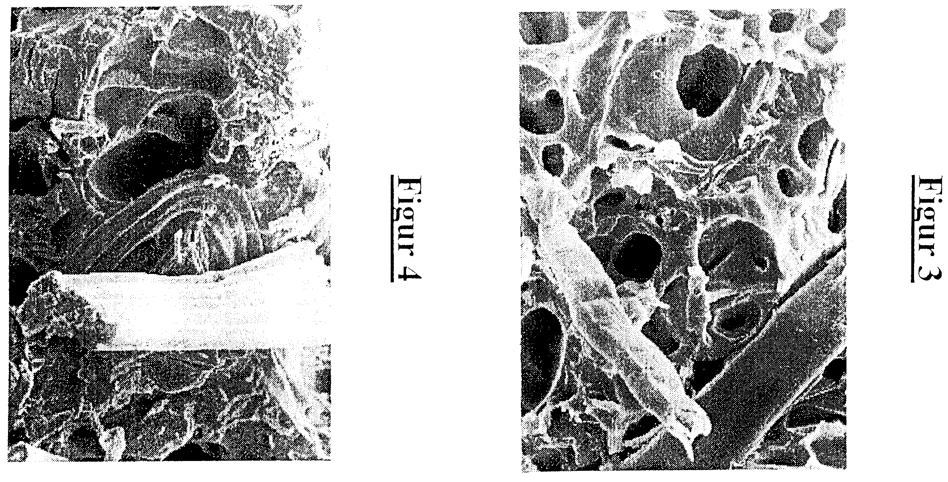

In den Figuren 2 bis 4 sind Rasterelektronenmikroskop-Aufnahme (REM) von Schnitten durch die Proben 2, 5 und 6 mit einer 500-fachen Vergrößerung dargestellt. Vor den Aufnahmen wurde die gKS aus dem Bereich des Schnittes durch spülen mit Wasser entfernt; d.h. in den Vertiefungen war gKS wobei das sichtbare und keine Fasern betreffende Material das resistente Polymer, im vorliegenden Fall also CP ist. Allen Aufnahmen ist gemeinsam, daß sie eine gleichmäßige Verteilung der Kunststoffe und der Fasern aufweisen. Desweiteren ist gut zu erkennen, daß das resistente Polymer das Bio-Polymer und die Fasern weitgehend umfaßt.

Bevorzugte Verwendungen für derartige Kunststoff-Formteile sind Formteile für Last- oder Personenkraftwagen oder Schienenfahrzeuge oder Luftfahrzeuge, insbesondere für deren Karosserie und/oder deren Verkleidung.

## Patentansprüche

1. Faserverstärktes Kunststoff-Formteil, das zumindest zu 80 % aus Materialien auf der Basis von nachwachsenden Rohstoffen gefertigt ist und das eine Kunststoffmatrix und in der Kunststoffmatrix insbesondere gleichverteilt angeordnete Naturfasern aufweist, wobei die Kunststoffmatrix aus einem oder mehreren Kunststoffen besteht, die selbst oder deren Ausgangsprodukte nachwachsende Rohstoffe - sogenannte Bio-Polymere - sind,
**dadurch gekennzeichnet,**
daß die Kunststoffmatrix mindestens zwei miteinander vermischte Polymere (2, 3) aufweist, von denen eines ein Bio-Polymer (2) und das andere ein aus nachwachsenden Rohstoffen bestehendes und gegenüber biologischen Beanspruchungen zumindest weitgehend resistentes Polymer (3) ist.

2. Kunststoff-Formteil nach Anspruch 1,
**dadurch gekennzeichnet,**
daß das Bio-Polymer (2) für die Kunststoffmatrix thermoplastische und/oder granuläre Stärke ist.

3. Kunststoff-Formteil nach Anspruch 1,
**dadurch gekennzeichnet,**
daß das resistente Polymer (3) ein biologisch allenfalls mäßig abbaubares (Bio-)Polymer ist, dessen Grundstoffe überwiegend nachwachsende Rohstoffe sind.

4. Kunststoff-Formteil nach Anspruch 1,
**dadurch gekennzeichnet,**
daß das resistente Polymer (3) Polyurethan (PU) und/oder Polyamid(PA) und/oder Cellulosederivat ist.

5. Kunststoff-Formteil nach Anspruch 1,
**dadurch gekennzeichnet,**
daß das resistente Polymer (3) der Kunststoffmatrix PU und/oder ein Cellulosederivat und/oder Cellulosepropionat ist, deren Grundstoffe zumindest teilweise nachwachsende Rohstoffe sind.

6. Kunststoff-Formteil nach Anspruch 1,
**dadurch gekennzeichnet,**
daß das resistente Polymer (3) thermoplastisch ist.

7. Kunststoff-Formteil nach Anspruch 1,
**dadurch gekennzeichnet,**
daß das resistente Polymer (3) PA 11 und/oder PA 610 und/oder PA 669 und/oder ein PA auf der Basis von Azelainsäure und/oder ein thermoplastisches PU mit Polyolkomponente natürlichen Ursprungs und/oder Cellulosepropionat und/oder ein Celluloseetherester ist.

8. Kunststoff-Formteil nach Anspruch 1,
**dadurch gekennzeichnet,**
daß die Kunststoffmatrix einen Celluloseetherester mit hohem Substitutionsgrad aufweist, der biologisch zumindest weitgehend resistent ist.

9. Kunststoff-Formteil nach Anspruch 1,
**dadurch gekennzeichnet,**
daß das Bio-Polymer (2) thermoplastische Stärke und/oder granuläre Stärke ist, daß das Bio-Polymer (2) in der Kunststoffmatrix eine disperse Phase bildet, daß das resistente Polymer (3) eine kontinuierliche Phase bildet und daß das resistente Polymer (3) die disperse Phase zumindest weitgehend, vorzugsweise vollständig umschließt.

10. Kunststoff-Formteil nach Anspruch 1,
**dadurch gekennzeichnet,**
daß die Kunststoffmatrix thermoplastische Stärke aufweist und daß die Stärke mit gebräuchlichen Weichmachern aufgeschlossen ist.

11. Kunststoff-Formteil nach Anspruch 10,
**dadurch gekennzeichnet,**
daß der Weichmacher Glyzerin und/oder Harnstoff und/oder Fruchtsäure ist.

12. Verfahren zur Herstellung eines faserverstärkten Kunststoff-Formteils, das zumindest zu 80 % aus Materialien auf der Basis nachwachsender Rohstoffe gebildet ist, bei welchem Verfahren Naturfasern in einer Kunststoffmasse verteilt und von der Kunststoffmasse zumindest weitgehend umschlossen werden, bei welchem Verfahren anschließen das Kunststoff/Naturfaser-Gemisch erwärmt und durch an sich bekannte Verfahren wie bspw. durch Spritzen, Extrudieren und/oder Pressen und dgl. in die gewünschte Form gebracht wird,
**dadurch gekennzeichnet,**
- daß für die Kunststoffmasse wenigstens ein auf nachwachsenden Rohstoffen basierendes Bio-Polymer (2) mit mindestens einem im wesentlichen gegen biologische Beanspruchungen resistenten Polymer (3) vermischt wird,
- daß der Kunststoffmasse zwischen 5 und 60, insbesondere zwischen 5 und 35 Gewichts-% Naturfasern (1) beigegeben werden, daß nach der Beigabe der Naturfasern (1) das Gemenge bei 100 °C bis 250 °C insbesondere bis 230 °C zu dem Kunststoff/ Naturfaser-Gemisch vermischt wird, und
- daß spätestens beim der Formgebung des Kunststoff-Formteils das Bio-Polymer (2) von dem resistenten Polymer (3) zumindest teilweise, bevorzugt weitgehend und besonders bevorzugt vollständig umschlossen wird.

13. Verfahren nach Anspruch 12,
**dadurch gekennzeichnet,**
daß für das Bio-Polymere (2) thermoplastische und/oder granuläre Stärke gewählt wird.

14. Verfahren nach Anspruch 12,
**dadurch gekennzeichnet,**
daß für das resistente Polymer (3) Celluloseetherester und/oder Polyamid 610 (PA 610) und/oder Polyamid 11 (PA 11) gewählt wird.

15. Verfahren nach Anspruch 12,
**dadurch gekennzeichnet,**
daß für das Bio-Polymere (2) thermoplastische und/oder granuläre Stärke gewählt wird und daß beim Vermischen zu dem Kunststoff/Naturfaser-Gemisch gebräuchlicher Weichmacher beigegeben, insbesondere nebelartig eingesprüht und die Stärke aufgeschlossen wird.

16. Verwendung eines Formteiles nach Anspruch 1 für faserverstärkte Kunststoff-Formteile für Last- oder Personenkraftwagen oder Schienenfahrzeuge oder Luftfahrzeuge.
